Europäisches Patentamt

European Patent Office

Office européen des brevets

(11) Publication number: **0 220 783**
**A2**

## (12) EUROPEAN PATENT APPLICATION

(21) Application number: 86201880.1

(22) Date of filing: 27.10.86

(51) Int. Cl.4: **B62D 59/04** , B62D 47/02

(30) Priority: 30.10.85 IT 2265185
24.07.86 IT 2124886

(43) Date of publication of application:
06.05.87 Bulletin 87/19

(84) Designated Contracting States:
BE CH DE FR GB LI NL

(71) Applicant: MAURI & C. S.a.s. di MAURI
Ambrogio e ZORLONI Costanza
Via Caravaggio, 24
I-20033 Desio (Prov. of Milano)(IT)

(72) Inventor: Mauri, Ambrogio
Via Garibaldi 254
I-20033 Desio Province of Milan(IT)

(74) Representative: Modiano, Guido et al
MODIANO, JOSIF, PISANTY & STAUB
Modiano & Associati Via Meravigli, 16
I-20123 Milan(IT)

(54) Automotive vehicle particularly for public transportation.

(57) The present invention relates to an automotive vehicle for public transportation which comprises a depressed platform and a bearing bodywork (1) or a chassis to which are associated at least two wheel axles (6,7), of which at least one (7) is steerable and at least one (6) is a driving axle. The peculiarity of the invention lies in that it comprises a trailer-mounted bearing chassis for supporting a motor, which is provided with wheels with a fixed axis of rotation. The trailer-mounted chassis (1) is articulated to the rear part of the bearing bodywork (1) or chassis with an articulated joint adapted for allowing a rotation around a horizontal axis and around a vertical axis. The motor actuates a hydraulic generator and/or an automatic gearshift which is operatively connected to said driving axle.

Fig. 1

# AUTOMOTIVE VEHICLE PARTICULARLY FOR PUBLIC TRANSPORTATION

The present invention relates to an automotive vehicle particularly for public transportation.

As is known, buses or trolley buses for public transportation, in their most common embodiment, currently have a chassis provided with an axle with steering wheels and with a driving axle, to which is associated a bodywork in aluminum alloy or in steel.

In such kinds of buses, the motor is supported by the chassis at the rear projection.

The presence of the motor in the rear part of the bus forces to have in this region a platform, which defines the internal treading zone, which is relatively high, and which subsequently slopes towards the front part, offering a platform in the front part at a relatively low elevation.

As is typical in public transportation means, it is important to have the platform of the bus as low as possible, as compatible with the operating conditions, so as to facilitate the boarding and exit of the passengers.

In the above described solution, this problem is at least partially solved, regarding the front part of the bus, but is instead notably, aggravated in the rear part, where the elevation is necessarily relatively high, since the motor must be accommodated.

Further more, the presence of the motor on the rear projection of the bus gives rise to problems of vibrations and soundproofing of the bus which are often difficult to solve.

Another disadvantage is furthermore represented by the fact that since there is a rear platform which is relatively elevated and a front and central part which have a relatively low platform, necessarily there is a connecting zone which is tilted and is notably uncomfortable for the passenger and furthermore gives rise to structural problems in providing the bodywork.

To try and solve the problem initially proposed, i.e. the problem of finding a more rational accommodation for the motor, theoretical solutions have already been provided, e.g. illustrated in the German patents No. 857.893, 872.006 and 897.517, as well as in the Italian patent No. 855.925, wherein the driving motor is placed on an independent trailer which is associated with the bus.

These solutions, which in practice correspond to a theoretical formulation of the problem, which have never had a practical embodiment due to the remarkable constructive difficulties arising from the kind of solution employed, and to the fact that it would have been necessary to introduce very severe constructive complications for transmitting the controls, are generally composed of a trailer mounted on wheels which have an axle which oscillates around a vertical axis.

The trailer is coupled to the rear part of the front body of the vehicle with the possibility of oscillating around a substantially horizontal axis.

In other words, the trailer, in the embodiment illustrated in the above mentioned patents, practically constitutes a "rigid" extension of the body of the bus, allowing the possibility of steering only by virtue of the presence of the wheels which can oscillate around a vertical axis.

Furthermore, the above mentioned embodiments give rise to very severe problems regarding the stability while moving, bearing in mind that the axis of the wheels of the trailer is not fixed.

The aim proposed by the invention is indeed to solve the above described problems, by providing an automotive vehicle particularly for public transportation which has a platform depressed for the entire useful length of the treading zone., thus making considerably easier both the boarding and the exit of passengers; this possibility is achieved by means of the application of a motor which is accommodated in a trailer which is independent from the bus or trolley bus.

Within the scope of the above described aim, a particular object of the invention is to provide an automotive vehicle particularly for public transportation which, by complying with the new above mentioned constructive criteria, which are determined by the presence of a constant-elevation platform, allows the possibility of, in a way, eliminating the bearing chassis, providing a bearing monobuilt bodywork or, the possibility of still using a bearing chassis in steel to which is connectable a bodywork in aluminum or in steel.

Still another object of the present invention is to provide an automotive vehicle wherein the unavoidable presence of the motor does not give rise to any problem in the access to the area of the bus assigned to the transportation of persons, since the motor is accommodated completely outside of this area.

A further object of the present invention is to provide an automotive vehicle for public transportation wherein all the servicing operations can be performed simply and quickly, since it is not necessary to intervene directly on the automotive vehicle, thus reducing the idle times and eliminating the reserve vehicles which are replaced by the bearing chassis of the motors.

Not least object of the present invention is to provide an automotive vehicle which has greater characteristics of comfort both for the passengers and for the driver, as well as a reduction in fuel consumption, due to the possibility of reducing the front cross section of the same bus.

The above described aim, as well as the objects described and others which will better appear hereinafter, are achieved by an automotive vehicle particularly for public transportation, according to the invention, comprising a depressed platform, a bearing bodywork and a chassis, to which are associated at least two axles for the wheels of which at least one is steerable and at least one is a driving axle, characterized in that it comprises a trailer-mounted chassis for bearing a motor, provided with wheels with a fixed axis of rotation, said trailer-mounted chassis being articulated to the rear part of said bearing bodywork or chassis, said motor actuating a hydraulic generator and/or an automatic gearshift which is operatively connected to said driving axle.

Further characteristics and advantages will become apparent from the following description of a preferred, but not exclusive, embodiment of an automotive vehicle for public transportation with a depressed platform, illustrated, by way of example only, in the accompanying drawings, wherein:

Fig. 1 is a schematic perspective view of a possible embodiment of the automotive vehicle for public transportation, according to the invention;

Fig.2 is an elevation view of the detail of the coupling of the trailer-mounted chassis to the bodywork or chassis of the automotive vehicle;

Fig. 3 is a schematic view, pointing out the steering space requirements of the bus;

Fig. 4 is a cross section view along the line IV-IV of Fig. 3 of the driving axle;

Fig. 5 is a partially cross sectioned elevation view of the detail of the articulated joint coupling between the bodywork or chassis and the trailer-mounted chassis;

Fig. 6 is a top plan view of the coupling region between the front body of the bus and the trailer-mounted chassis, during rectilinear travel;

Fig. 7 is a top plan view, partially in cross section, of the coupling region between the front body of the bus and trailer-mounted chassis while performing a curve;

Fig. 8 is a schematic elevation view of the coupling region between the front body of the bus and the trailer-mounted chassis during level travel;

Fig. 9 is a view of the coupling region of the front body of the trailer-mounted chassis in case of a hollow; and

Fig.10 is a view of the coupling region of the trailer-mounted chassis in the case of a "cat's back".

With reference to the above described figures, the automotive vehicle for public transportation with a depressed platform, according to the invention, advantageously comprises a bearing monobuilt bodywork in aluminum alloy, generally designated with the reference numeral 1, which has a platform 2 which provides the treading platform, which extends substantially at a constant elevation from the ground at an elevation which is expediently limited to approximately 55 centimeters.

This height is extremely valid for allowing the easy boarding and exit of passengers, which are not forced to climb high steps.

The platform thus provided has notable strengthening structural characteristics, also due to an appropriate selection of the dimensions of the profiled parts which compose it. Laterally, said platform is associated with lateral body sides 3, which are also advantageously provided in aluminum alloy, and are upwardly joined by a bearing roof 4 which connects with joining means, per se known, to the same body sides.

The adopted constructive solution thus allows one to achieve, in practice, a bearing monobuilt bodywork, wherein all the composing elements collaborate and cooperate so as to achieve the desired mechanical rigidity.

Eventually, it is also possible to employ, in the place of the bearing monobuilt bodywork 1 mentioned above, a conventional bearing chassis advantageously provided in tubular steel, to which is associatable a bodywork in aluminum alloy or a conventional steel bodywork.

To the bearing monobuilt bodywork 1 or eventually to the usual bearing chassis is coupled an axle for the rear wheels 6, which is a driving axle, and is advantageously of the hydraulically-operated type, commonly available on the market, or of the bridge type such as the ZFAV 130 actuated by a cardan shaft connected to an automatic gearshift.

To the bodywork or to the chassis is furthermore coupled a front axle 7 for the steering wheels.

The adopted solution allows to vary, within the limits prescribed by the rules, the wheel base of the axles without thereby entailing the performing of structural modification of the chassis, but by simply varying accordingly the dimensions in length of the body sides and consequently of all the other component elements.

At said axles 6 and 7, cover guards 10 are provided for covering the region occupied by the wheel, which also have a structural function, to compensate the weakening of the platform which, obviously, in this region must have a reduced width.

The most important characteristic of the invention is that the motor, generally designated with the reference numeral 20, is not directly supported by the bodywork, but is coupled to a trailer-mounted chassis 21, the wheels of which have a fixed axis, which articulates with an articulated joint, generally designated with the reference numeral 22, with the rear part of the bodywork.

The articulated joint 22 is provided in such a manner that its center of rotation coincides with the perpendicular line passing through the rear part of the front body of the vehicle, indeed composed of said chassis or of the monobuilt bodywork.

The articulated joint, generally designated with the reference numeral 22, can be composed of a coupling of the spherical type, or of a spherical pivot or of a circular crown or eventually, as illustrated in the drawings, of a thrust block 23 of the kind, e.g., SK-A/2 of the Giorgio Fischer Company, which has a central pivot 24 coupled to the braking portion of the thrust block assembly and has an upper fin 25, composed of an element which lies in a vertical plane and is slideably engageable in guiding elements 26 matchingly provided on the bodywork or on the chassis and mounted with the possibility of rotating around the vertical articulation axis, so as to allow the free oscillation, maintaining the braking conditions of the thrust block, even around a horizontal axis, i.e. for changes in inclination of the plane of motion of the vehicle.

The presence of the upper fin 25 allows the operation of the brake even in vertical motions of the trailer-mounted chassis with fixed-axis wheels, i.e. in motions around a horizontal axis.

As illustrated in Figs. 6 and 7, the position of the articulated joint exactly coincides with the rear part of the bodywork, so as to allow a wide excursion in the rotation around the vertical axis, i.e. during normal steering.

On the other hand, as indicated in Figs. 8, 9 and 10, the possibility of oscillating around a horizontal axis, with the guiding determined by the horizontal fin, allows to oscillate around a horizontal axis, so that no problems are encountered while moving in the case of hollows or "cat's backs" or of any change in the slope of the terrain on which the automotive vehicle moves.

The motor 20, which can be composed of an internal combustion engine such as a Diesel engine, of an electric motor, or of a Diesel engine and an electric motor combined to each other, consequently constitutes an independent part, provided with its axle with running wheels which in practice is towed by the automotive vehicle, keeping fixed the axis of the wheels.

The coupling with the driving axle can be achieved by means of a hydraulic generator 30 driven by the motor which is operatively connected, by means of a pair of conduits, with the driving axle 6, with a coupling, e.g., of the type illustrated in the US patent No. 4.502.558.

A similar connection is achieved by connecting the motor to an automatic gearshift, e.g. of the ZFHP 500 type, which, by virtue of a transmission shaft, connects itself to the bridge or driving axle 6. The transmission shaft, as schematically illustrated in the drawings, is provided in such a manner as to have a first section 40 for coupling between the trailer-mounted chassis and the bodywork or chassis which is positioned in such a manner that the center of rotation around the vertical axis of the trailer-mounted chassis is expediently exactly halfway on the section 40 of the transmission shaft, thus making the universal-joint shaft itself homokinetic, thus allowing rotation even with relatively high angles.

The section 40 is coupled with a return section 41 provided axially on the longitudinal mid-line of the automotive vehicle, which is articulated, again with a universal joint, with the terminal section 42 for coupling to the driving axis.

In the solution described, which entails the independent application of the motor, a notable series of advantages is achieved, constituted, e.g., by the fact that the vibrations generated by the motor are not transmitted to the bodywork, there is no motor noise, which gives rise to discomfort both for the driver and for the passengers, and furthermore, very important, there is the possibility of keeping the treading platform linear for the entire vehicle and at a relatively low elevation from the ground, since there are no dimensional restrictions imposed by the motor, as in the currently provided solutions.

An extremely important feature furthermore lies in the fact that, having the motor connected to the bodywork, practically simply by means of hydraulic conduits, in the case of hydraulic transmission, which transmits the fluid to the driving axle or by means of the transmission shaft only, in the case of the use of an automatic gearshift, as well as the various connections for operating the motor and for supplying fuel, it also allows the possibility of removing, in case of malfunction, with extreme speed and ease the motor of the bodywork, replacing it with another motor, without having the need to stop the vehicle for long periods.

With the arrangement described, in the lower part of the platform it is furthermore possible to apply all the ancillary elements, such as the fuel tank of the vehicle, which can be associated in the lower central part, as well as all the mechanisms or elements which are necessary to perform the opening of the doors.

The arrangement of the fuel tank in the lower central part also allows the possibility of having a greater access to the lateral body sides, with the possibility of increasing further the number of boarding or descent doors, which can be, e.g., in number of five, for a bus with a 12-meter body work and an overall length, i.e. including the motor, of approximately 14 meters.

The presence of the motor on an independent trailer-mounted chassis also allows the possibility of having no restrictions regarding the type of motor to apply, since it is possible to choose among a very vast range of motors available on the market.

For the sake of descriptive completeness, it should furthermore be noted that advantageously the trailer-mounted chassis is coupled to the chassis by means of a conventional bellows, designated with 50, in order to protect the assembly in the best possible manner from the unavoidable sprays of water and mud.

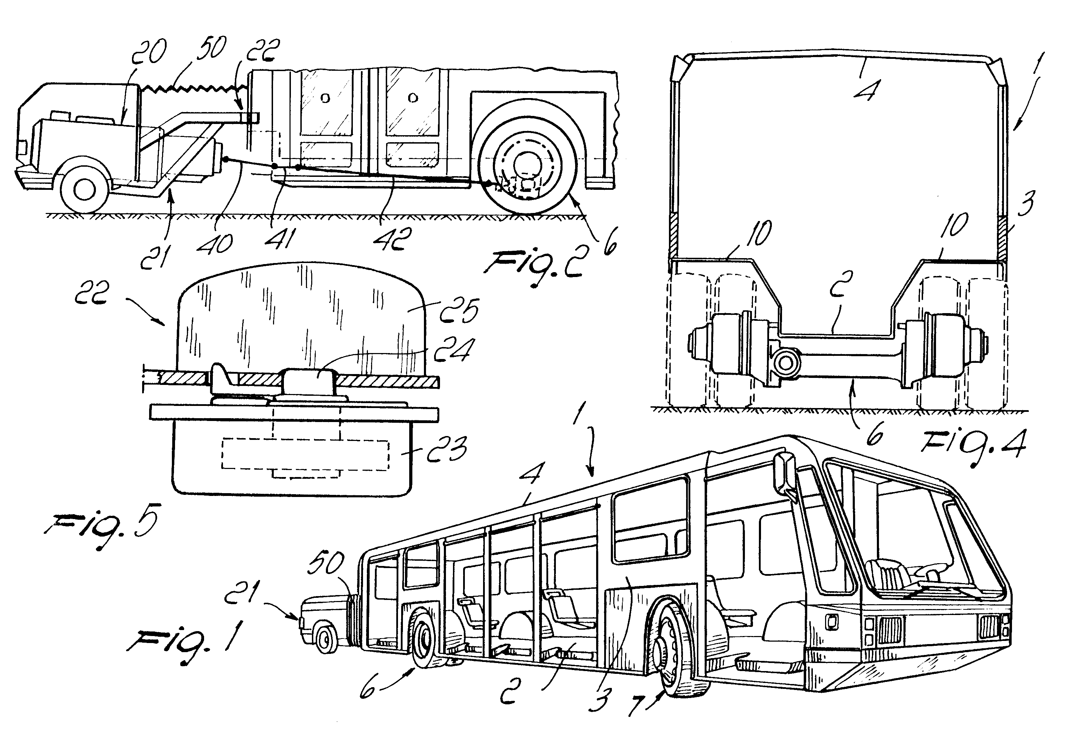

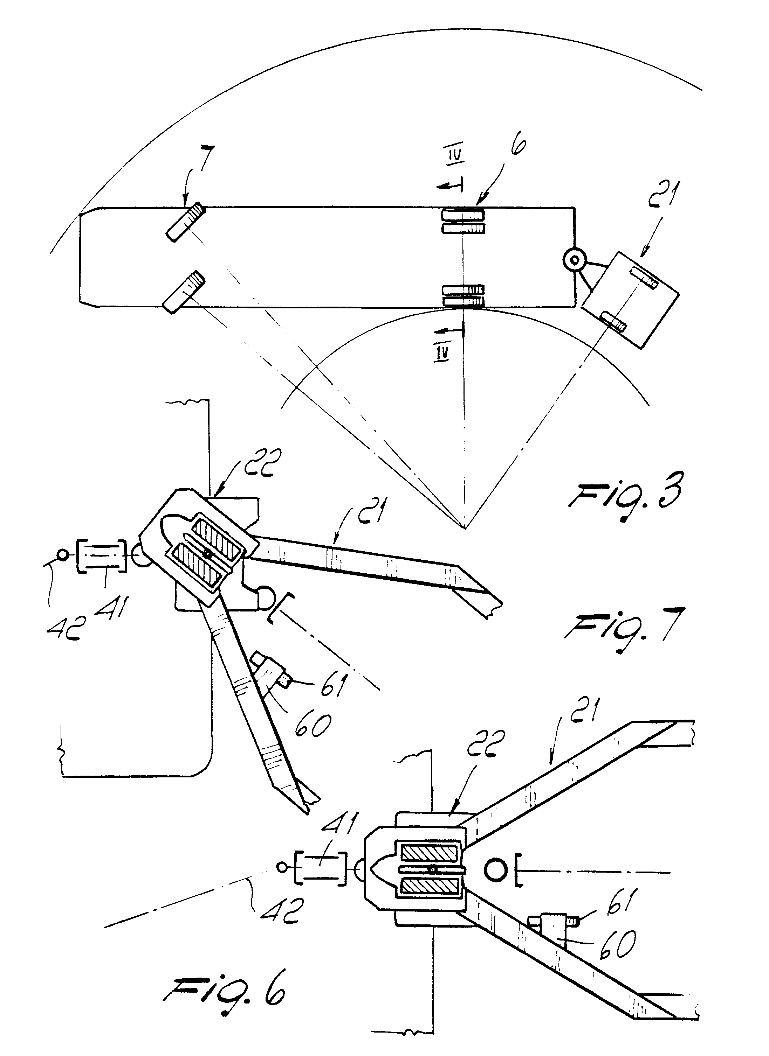

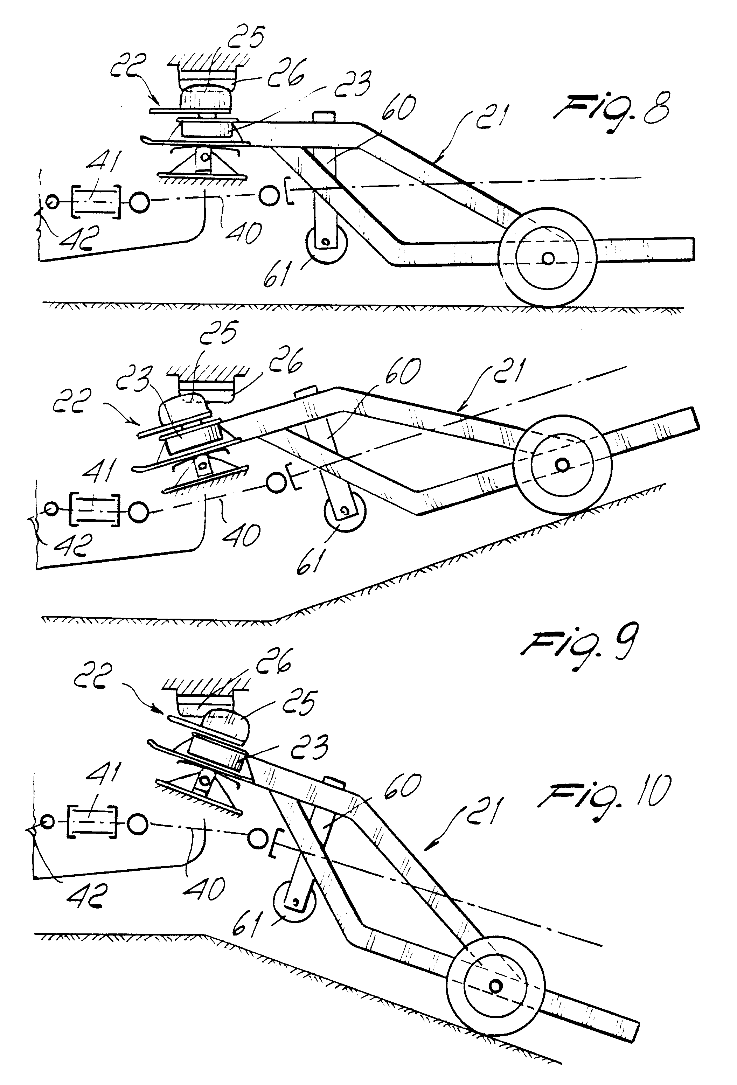

Furthermore, the fact of having the trailer-mounted chassis mounted on wheels which have a fixed axis, allows the possibility, by performing the connection by virtue of a universal joint which allows a rotation both around a vertical axis and around a horizontal axis, to retain the same trailer-mounted chassis, when turning, within the turning space requirements of the front body of the automotive vehicle, without thereby having excessive dimensions or parts protruding when turning, as is - schematically pointed out in Fig. 3.

To what has been described, it must be furthermore added that is is possible to provide, on the trailer-mounted chassis, a front retractable support 60 for employing an auxiliary wheel 61, which aids the motion of the same chassis.

From what has been described, it can therefore be seen that the invention achieves the aims proposed, and in particular the fact is stressed that the new structural solution, constituted by the fact that the motor is not mounted directly on the bodywork of the automotive vehicle, but on a separate element which is composed of a trailer-mounted chassis with wheels with a fixed axis, allows the possibility of achieving a very wide range of advantages, such as the possibility of easily and quickly replacing the element with the motor, and others which range from the full-length depressed platform to the possibility of having a fully bearing bodywork, without therefore the need for the chassis for the wheel axle, to the fact that the noise and access to the automotive vehicle are considerably improved and that the inscription in a curve entails no danger, since the trailer-mounted chassis does not protrude from the transit space, as described above.

The invention thus conceived is susceptible to several modifications and variations, all of which are within the scope of the inventive concept.

Furthermore, all the details may be replaced by other technically equivalent elements.

Practically, the materials employed, so long as compatible with the specific use, as well as the dimensions and the contingent shapes, may be any according to the requirements.

## Claims

1. Automotive vehicle particularly for public transportation, comprising a depressed platform, a load-bearing bodywork (1) or chassis to which are associated at least two axles for the wheels (6,7), of which at least one (7) is for steering and at least another one (6) is a driving axle, characterized in that it comprises a trailer-mounted chassis (21) for bearing a motor (20), having wheels with a fixed axis of rotation, said trailer-mounted chassis (21) being articulated to the rear part of said load-bearing bodywork (1) or chassis, said motor (20) driving a hydraulic generator (30) and/or an automatic gearshift operatively connected to said driving axle (6).

2. Automotive vehicle particularly for public transportation, according to the preceding claim, characterized in that it comprises wheel cowlings - (10) interconnecting said platform (2) and the lateral body sides (3), said wheel cowlings (10) having a structural reinforcing function.

3. Automotive vehicle particularly for public transportation, according to the preceding claims, characterized in that said motor (20) is composed of a Diesel engine, of an electric motor, and of an electric motor and a Diesel engine selectively combined to each other.

4. Automotive vehicle particularly for public transportation, according to one or more of the preceding claims, characterized in that it comprises a fuel tank provided in the central lower portion of said platform (2).

5. Automotive vehicle particularly for public transportation, according to one or more of the preceding claims, characterized in that said platform (2) has, for its entire extension, an elevation from the ground smaller than or equal to 55 centimeters.

6. Automotive vehicle particularly for public transportation, according to the preceding claims, characterized in that said trailer-mounted chassis - (21) is connected to the rear part of said bearing bodywork (1) or chassis by means of an articulated joint (22) adapted for allowing a rotation around a substantially horizontal axis and around a substantially vertical axis, defining the center of rotation on the rear part of said bearing bodywork (1) or chassis.

7. Automotive vehicle particularly for public transportation, according to one or more of the preceding claims, characterized in that said articulated joint (22) is composed of a thrust block (23) with a central pivot (24) extending from a disk brake of the articulation, the axis of rotation of said central pivot (24) intersecting the crossing point of the vertical axis and of the horizontal axis of rotation of said articulated joint (22).

8. Automotive vehicle particularly for public transportation, according to one or more of the preceding claims, characterized in that it comprises rigidly coupled to said central pivot (24) a vertical fin (25) which engages with guiding bodies (26) suitable for allowing the operativity of the brake of the thrust block in the oscillating motions of the trailer-mounted chassis (21) around a substantially horizontal axis.

9. Automotive vehicle particularly for public transportation, according to one or more of the preceding claims, characterized in that with said motor (30) coupled to the driving axle by means of an automatic gearshift a cardan shaft is provided having a shaft section (40) interconnected between said monobuilt bodywork (1) or chassis and said trailer-mounted chassis, the middle portion of which is positioned on the center of rotation around the vertical axis of said articulated joint (22), for the rotation in the horizontal plane of said trailer-mounted chassis (2) with fixed-axis wheels.

10. Automotive vehicle particularly for public transportation, according to one or more of the preceding claims, characterized in that it comprises on said trailer-mounted chassis (21) a retractable support (60) with a supporting wheel (61) for moving said trailer-mounted chassis (21).

Fig.1

Fig.2

Fig.4

Fig.5

0 220 783

Fig.3

Fig.7

Fig.6

Fig. 8

Fig. 9

Fig. 10